(19)

Europäisches
Patentamt

European
Patent Office

Office européen
des brevets

(11) **EP 4 415 447 A1**

(12) **EUROPEAN PATENT APPLICATION**

(43) Date of publication:
**14.08.2024   Bulletin 2024/33**

(21) Application number: **23217407.8**

(22) Date of filing: **18.12.2023**

(51) International Patent Classification (IPC):
**H04W 72/02** *(2009.01)*      **H04W 72/40** *(2023.01)*
**H04W 72/0446** *(2023.01)*    **H04L 5/00** *(2006.01)*

(52) Cooperative Patent Classification (CPC):
**H04W 72/02;** H04L 5/00; H04W 72/0446;
H04W 72/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **13.02.2023   US 202318108783**

(71) Applicant: **Nokia Technologies Oy
02610 Espoo (FI)**

(72) Inventors:
• **MEDINA, Daniel
Munich (DE)**

• **WILDSCHEK, Torsten
Gloucester (GB)**
• **JACOBSEN, Thomas Haaning
Nørresundby (DK)**
• **SABOURI-SICHANI, Faranaz
Aalborg (DK)**
• **VAN PHAN, Vinh
Oulu (FI)**
• **YU, Ling
Kauniainen (FI)**

(74) Representative: **Nokia EPO representatives
Nokia Technologies Oy
Karakaari 7
02610 Espoo (FI)**

(54) **ENHANCED UE AUTONOMOUS RESOURCE SELECTION FOR DYNAMIC COEXISTENCE OF SL TRANSMISSIONS WITH DIFFERENT SUBCARRIER SPACING**

(57)    In accordance with example embodiments of the invention there is at least a method and apparatus to perform determining a first set of candidate single-slot resources for a physical sidelink shared channel transmission by a first user equipment; determining a second set of candidate multi-slot resources for the physical sidelink shared channel transmission by the first user equipment; and reporting at least one candidate single-slot resource from the first set and at least one candidate multi-slot resource from the second set to a higher layer for resource selection. Further, to perform determining a union set by forming a union of the first set and the second set; determining a subset of the union set by excluding a candidate resource at least based on whether the candidate resource overlaps with a resource reserved for transmission by a second user equipment; and reporting the determined subset to the higher layer for resource selection.

EP 4 415 447 A1

**Description**

TECHNICAL FIELD:

The teachings in accordance with the exemplary embodiments of this invention relate generally to proposed operations to enhance the standard UE autonomous resource selection procedure for a new radio sidelink (NR SL) and, more specifically, relate to a proposed operations to enhance the standard UE autonomous resource selection procedure for new radio sidelink (NR SL) by allowing the NR physical (PHY) layer to report to the NR medium access control (MAC) layer candidate resources under certain conditions.

BACKGROUND:

This section is intended to provide a background or context to the invention that is recited in the claims. The description herein may include concepts that could be pursued, but are not necessarily ones that have been previously conceived or pursued. Therefore, unless otherwise indicated herein, what is described in this section is not prior art to the description and claims in this application and is not admitted to be prior art by inclusion in this section.

Certain abbreviations that may be found in the description and/or in the Figures are herewith defined as follows:

| | |
|---|---|
| ACK | Acknowledgment |
| ADC | Analog-to-Digital Converter |
| AGC | Automatic Gain Control |
| FFS | For further study |
| HARQ | Hybrid Automatic Repeat Request |
| MAC | Medium Access Control (L2) |
| NACK | Negative Acknowledgment |
| PHY | Physical Layer (L1) |
| PSCCH | Physical Sidelink Control Channel |
| PSFCH | Physical Sidelink Feedback Channel |
| PSSCH | Physical Sidelink Shared Channel |
| RP | Resource Pool |
| RSRP | Reference Signal Received Power |
| RSW | Resource Selection Window |
| SCI | Sidelink Control Information |
| SCS | Subcarrier Spacing |
| SL | Sidelink |
| SNR | Signal-to-Noise Ratio |
| TB | Transport Block |
| TTI | Transmission Time Interval |
| UE | User Equipment |

Standards agreements at the time of this application relate to:
For the study of co-channel coexistence solutions in Rel-18, the combination of operational modes Mode 2 NR SL with Mode 4 LTE SL (Combination A) is considered with high priority.

In addition, these standards agreements can be based on a working assumption:

Co-channel coexistence between LTE SL and NR SL is supported for device type A;
Device type A contains both LTE SL and NR SL modules; and
For device type A, the NR SL module may use the sensing and resource reservation information shared by the LTE SL module.

Another standards agreements at the time of this application relates to:
For co-channel coexistence, dynamic resource pool sharing is studied, with the following constraints:
In an agreement, for dynamic resource pool sharing, the NR SL module uses the candidate information shared by the LTE SL module to the NR SL module, where:

∘ The NR SL module excludes resources based on the shared information from its own candidate resource set when performing the resource (re)selection procedure in the PHY layer:

- FFS how to exclude resources at least based on the time and frequency locations of LTE SL transmissions that have been indicated in the shared candidate information; and
  - FFS how the exclusion is performed according to clause 8.1.4 of TS 38.214.

A standards agreements proposal at the time of this application relates to:

- For dynamic resource pool sharing, the following options are studied to resolve the AGC issue in LTE SL UEs which is caused by NR SL PSCCH/PSSCH transmissions if higher SCSs are supported:

  ○ Option 1: The NR SL transmissions of higher SCSs are transmitted on all slots within a LTE SL subframe of 15 kHz:
  ○ Option 3: NR SL UE uses the information shared by the LTE SL module in its own resource selection procedure to exclude slots overlapping with LTE SL transmissions:

    - FFS: Exclude only those slots where the first symbol of the NR SL transmission is not overlapping in time with the first symbol of the LTE subframe.

One problem that can be seen is the so-called "AGC issue" in these agreements that is caused in LTE SL UEs by NR SL transmissions in case different SCSs are configured for NR SL and LTE SL. The AGC issue may occur whenever an NR SL transmission overlaps in time with an LTE SL transmission and the NR SL transmission starts after the LTE SL RX UE(s) have performed AGC (this occurs at the beginning of each LTE SL subframe): the LTE SL RX UE(s) may experience an unexpected increase in received power in the middle of an LTE SL subframe, which may cause saturation of the receiver's ADC.

To address at least these issues, example embodiments of the invention at least work to increase a number of candidate resources in an enhanced UE autonomous resource selection procedure.

SUMMARY:

This section contains examples of possible implementations and is not meant to be limiting.

In an example aspect of the invention, there is an apparatus, such as a user equipment side apparatus, comprising: at least one processor; and at least one non-transitory memory storing instructions, that when executed by the at least one processor, cause the apparatus at least to: determine a first set of candidate single-slot resources for a physical sidelink shared channel transmission by a first user equipment; determine a second set of candidate multi-slot resources for the physical sidelink shared channel transmission by the first user equipment; and report at least one candidate single-slot resource from the first set and at least one candidate multi-slot resource from the second set to a higher layer for resource selection

In still another example aspect of the invention, there is a method comprising: determining a first set of candidate single-slot resources for a physical sidelink shared channel transmission by a first user equipment; determining a second set of candidate multi-slot resources for the physical sidelink shared channel transmission by the first user equipment; and reporting at least one candidate single-slot resource from the first set and at least one candidate multi-slot resource from the second set to a higher layer for resource selection.

A further example embodiment is an apparatus and a method comprising the apparatus and the method of the previous paragraphs, wherein there is determining a union set by forming a union of the first set and the second set; determining a subset of the union set by excluding a candidate resource at least based on whether the candidate resource overlaps with a resource reserved for transmission by a second user equipment; and reporting the determined subset to the higher layer for resource selection, wherein determining the subset further comprises excluding a candidate resource based at least on whether an earliest slot of the candidate resource occurs at the beginning of a corresponding transmission time interval or subframe for transmission using a smaller subcarrier spacing, wherein excluding the candidate resource is further based on whether the corresponding transmission time interval or subframe comprises a resource reserved for transmission by a third user equipment using the smaller subcarrier spacing, and/or wherein excluding the candidate resource is further based on whether the first user equipment is expected to transmit at the beginning of the corresponding transmission time interval or subframe.

A non-transitory computer-readable medium storing program code, the program code executed by at least one processor to perform at least the method as described in the paragraphs above.

In yet another example aspect of the invention, there is an apparatus comprising: means for determining a first set of candidate single-slot resources for a physical sidelink shared channel transmission by a first user equipment; means for determining a second set of candidate multi-slot resources for the physical sidelink shared channel transmission by the first user equipment; and means for reporting at least one candidate single-slot resource from the first set and at least one candidate multi-slot resource from the second set to a higher layer for resource selection.

In accordance with the example embodiments as described in the paragraph above, at least the means for determining and means for reporting comprises a network interface, and computer program code stored on a computer-readable medium and executed by at least one processor.

A communication system comprising network devices such as the user equipment performing operations as described above.

BRIEF DESCRIPTION OF THE DRAWINGS:

The above and other aspects, features, and benefits of various embodiments of the present disclosure will become more fully apparent from the following detailed description with reference to the accompanying drawings, in which like reference signs are used to designate like or equivalent elements. The drawings are illustrated for facilitating better understanding of the embodiments of the disclosure and are not necessarily drawn to scale, in which:

FIG. 1 shows an example comparing NR slot aggregation (Option 1) and NR slot exclusion (Option 3);
FIG. 2 shows an example of candidate resources consisting of a variable number of slots;
FIG. 3 shows an enhanced UE autonomous resource selection for dynamic coexistence of SL transmissions with different SCS according to the invention (Embodiment 1);
FIG. 4 shows an Enhanced UE autonomous resource selection for dynamic coexistence of SL transmissions with different SCS according to the invention (Embodiment 2);
FIG. 5 shows a high level block diagram of various devices used in carrying out various aspects of the invention; and
FIG. 6 shows a method in accordance with example embodiments of the invention which may be performed by an apparatus.

DETAILED DESCRIPTION:

In example embodiments of this invention there is proposed operations to enhance the standard UE autonomous resource selection procedure for NR SL by allowing the NR PHY layer to report to the NR MAC layer candidate resources under certain conditions.

As similarly stated above, one problem that can be seen here is the so-called "AGC issue" in these agreements that is caused in LTE SL UEs by NR SL transmissions in case different SCSs are configured for NR SL and LTE SL. The AGC issue may occur whenever an NR SL transmission overlaps in time with an LTE SL transmission and the NR SL transmission starts after the LTE SL RX UE(s) have performed AGC (this occurs at the beginning of each LTE SL subframe): the LTE SL RX UE(s) may experience an unexpected increase in received power in the middle of an LTE SL subframe, which may cause saturation of the receiver's ADC.

According to Proposal 1-5 (II) above (which was discussed but not agreed on 17th November 2022), the following options may be further studied to address the AGC issue:

- NR slot aggregation (Option 1): NR SL transmissions are transmitted on all slots within an LTE SL subframe;
- NR slot exclusion (Option 3): An NR SL UE excludes from its transmission resource selection NR slots overlapping with LTE SL transmissions, except those NR slots at the beginning of an LTE SL subframe.

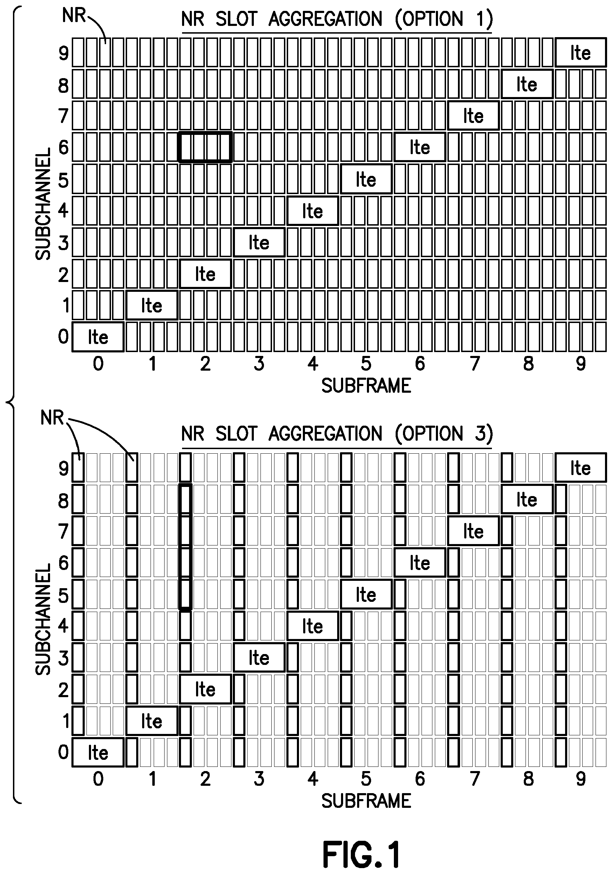

FIG. 1 shows an example comparing NR slot aggregation (Option 1) and NR slot exclusion (Option 3). In option 1 the NR SL is transmitted on all slots within LTE SL subframe. In option 3 NR SL excludes slots overlapping with LTE SL (other than first slot within subfame). These options are illustrated in FIG. 1 for the case where the NR SL resource pool is configured with an SCS of 60kHz (LTE SL always uses an SCS of 15kHz), i.e., each LTE SL subframe contains exactly 4 NR slots. Resources marked LTE are reserved by LTE SL UEs: here, an extreme case is illustrated in which a single subchannel is reserved in every LTE SL exclude (leaving in principle plenty of channel capacity for NR SL). Remaining resources as at least identified as "NR" are available for resource selection by NR SL UEs. In case of NR slot aggregation (Option 1), all NR slots are available for resource selection, but must be used in an aggregated fashion (i.e., the 4 consecutive NR slots overlapping with an LTE SL subframe are to be used for an NR SL transmission, as indicated by the black rectangle in Option 1). In case of NR slot exclusion (Option 3), only the first NR slot within an LTE SL subframe is available for resource selection (i.e., excluded). A candidate single-slot resource consisting of 4 contiguous subchannels is indicated by the black rectangle in Option 3 - this may be used to transmit a payload of similar size as the candidate 4-slot resource indicated by the black rectangle in option 1.

In this extreme example, NR slot exclusion results in a severe reduction in the channel capacity available for NR SL: only one fourth (25%) of the capacity that would be available with NR slot aggregation is available with NR slot exclusion (i.e., Option 1 has four times the capacity of Option 3). In practice, this may cause an NR SL UE performing candidate single-slot resource selection (Option 3) according to the standard procedure (specified in TS 38.214, clause 8.1.4) to significantly increase its RSRP threshold for resource exclusion, resulting in higher interference among SL transmissions. Another potential advantage of NR slot aggregation (Option 1) is the increased SNR that may be achieved by spreading a PSSCH transmission in time (e.g., as a result of the increased signal energy if the maximum transmit power is used over multiple slots).

On the other hand, NR slot aggregation (Option 1) has the disadvantage that it may increase latency, especially if multiple (re)transmissions of a TB are required for successful decoding. For example, a single-slot PSSCH transmission may receive PSFCH carrying HARQ feedback (ACK/NACK) earlier than a multi-slot PSSCH transmission. In addition, the half-duplex constraint becomes more problematic with a multi-slot PSSCH transmission: with a single-slot PSSCH transmission the UE may be able to receive PSSCH from another UE in a later slot within the same subframe.

Thus, neither option is optimal in all situations.

Enhanced UE Autonomous Resource Selection for Dynamic Coexistence of SL Transmissions with Different SCS

It is proposed to enhance the standard UE autonomous resource selection procedure for NR SL (specified in TS 38.214, clause 8.1.4: "UE procedure for determining the subset of resources to be reported to higher layers in PSSCH resource selection in sidelink resource allocation mode 2") by allowing the NR PHY layer to report to the NR MAC layer candidate resources consisting of an unequal (i.e., non-uniform) number of slots (n) within a subframe, under the constraint that the earliest slot of a candidate n-slot resource occurs at the beginning of the corresponding subframe whenever the subframe contains a resource expected to be used for transmission by an LTE SL UE (in order to avoid the AGC issue). The report may include a single candidate resource set ($S_A$) comprising candidate resources with a variable number of slots (n = 1, ...,1V). Alternatively, the report may include multiple (separately determined) candidate resource sets ($S_n$, n = 1, ... , N) each of which comprises candidate resources consisting of a fixed number of slots ($n$).

It is noted that in accordance with example embodiments of the invention a reference to a "higher layer" in this paper such as for operations related to resource selection or reporting can be referring to a particular open system interconnections (OSI) layer that is higher than another OSI layer for example a data link layer or a medium access control layer or any layer above a physical layer of the open system interconnections layers.

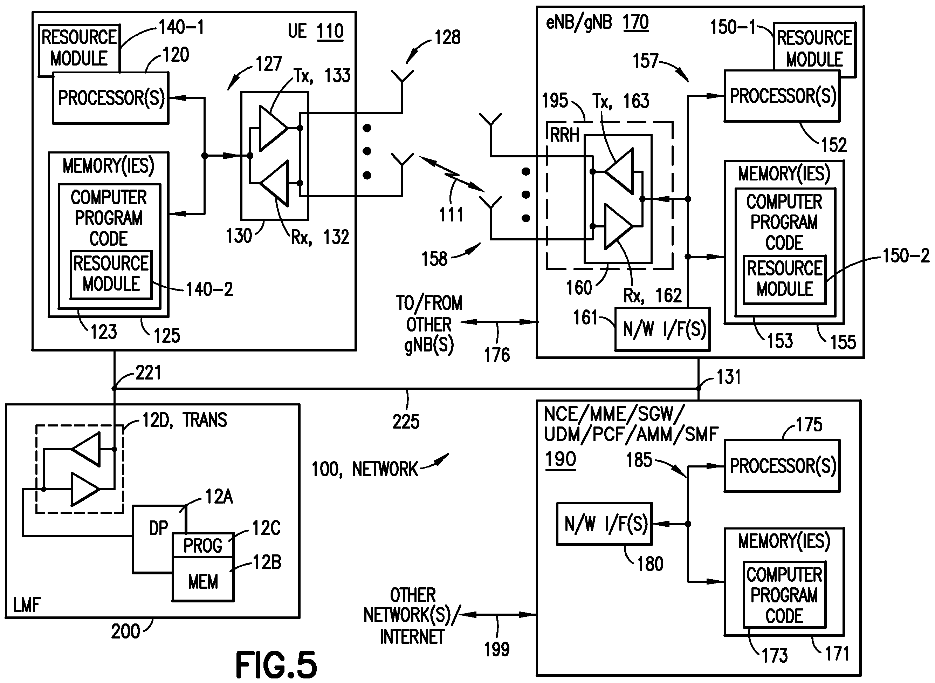

Before describing the example embodiments of the invention in further detail, reference is made to FIG. 5. FIG. 5 shows a block diagram of one possible and non-limiting exemplary system in which the exemplary embodiments may be practiced.

As shown in FIG. 5, a user equipment (UE) 110 is in wireless communication with a wireless network 100. A UE is a wireless, typically mobile device that can access a wireless network. The UE 110 includes one or more processors 120, one or more memories 125, and one or more transceivers 130 interconnected through one or more buses 127. Each of the one or more transceivers 130 includes a receiver Rx, 132 and a transmitter Tx 133. The one or more buses 127 may be address, data, or control buses, and may include any interconnection mechanism, such as a series of lines on a motherboard or integrated circuit, fiber optics or other optical communication equipment, and the like. The one or more transceivers 130 are connected to one or more antennas 128. The one or more memories 125 include computer program code 123. The UE 110 may include a Resource module 140 which is configured to perform the example embodiments of the invention as described herein. The Resource module 150 may be implemented in hardware by itself of as part of the processors and/or the computer program code of the UE 110. The Resource module 140 comprising one of or both parts 140-1 and/or 140-2, which may be implemented in a number of ways. The Resource module 140 may be implemented in hardware as Resource module 140-1, such as being implemented as part of the one or more processors 120. The Resource module 140-1 may be implemented also as an integrated circuit or through other hardware such as a programmable gate array. In another example, the Resource module 140 may be implemented as Resource module 140-2, which is implemented as computer program code 123 and is executed by the one or more processors 120. Further, it is noted that the Resource modules 140-1 and/or 140-2 are optional. For instance, the one or more memories 125 and the computer program code 123 may be configured, with the one or more processors 120, to cause the user equipment 110 to perform one or more of the operations as described herein. The UE 110 communicates with gNB 170 via a wireless link 111 and the LMF 200 via link 221.

The gNB 170 (NR/5G Node B or possibly an evolved NB) is a base station (e.g., for LTE, long term evolution) that provides access by wireless devices such as the UE 110 to the wireless network 100. The gNB 170 includes one or more processors 152, one or more memories 155, one or more network interfaces (N/W I/F(s)) 161, and one or more transceivers 160 interconnected through one or more buses 157. Each of the one or more transceivers 160 includes a receiver Rx 162 and a transmitter Tx 163. The one or more transceivers 160 are connected to one or more antennas 158. The one or more memories 155 include computer program code 153. The gNB 170 includes a Resource module 150 which is configured to perform example embodiments of the invention as described herein. The Resource module 150 may comprise one of or both parts 150-1 and/or 150-2, which may be implemented in a number of ways. The Resource module 150 may be implemented in hardware by itself or as part of the processors and/or the computer program code of the gNB 170. Resource module 150-1, such as being implemented as part of the one or more processors 152. The Resource module 150-1 may be implemented also as an integrated circuit or through other hardware such as a programmable gate array. In another example, the Resource module 150 may be implemented as Resource module 150-2, which is implemented as computer program code 153 and is executed by the one or more processors 152. Further, it is noted that the Resource modules 150-1 and/or 150-2 are optional. For instance, the one or more memories 155 and the computer program code 153 may be configured to cause, with the one or more processors 152, the gNB 170 to perform one or more of the operations as described herein. The one or more network interfaces 161 communicate over a network such as via the links 176, 221, and 131. Two or more gNB 170 may communicate using, e.g., link 176. The link 176 may be wired or wireless or both and may implement, e.g., an X2 interface.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195, with the other elements of the gNB 170 being physically in a different location from the RRH, and the one or more buses 157 could be implemented in part as fiber optic cable to connect the other elements of the gNB 170 to the RRH 195.

It is noted that description herein indicates that "cells" perform functions, but it should be clear that the gNB that forms the cell will perform the functions. The cell makes up part of a gNB. That is, there can be multiple cells per gNB.

The wireless network 100 may include a NCE/MME/SGW/UDM/PCF/AMM/SMF 190, which can comprise a network control element (NCE), and/or serving gateway (SGW) 190, and/or MME (Mobility Management Entity) and/or SGW (Serving Gateway) functionality, and/or user data management functionality (UDM), and/or PCF (Policy Control) functionality, and/or Access and Mobility Management (AMM) functionality, and/or Session Management (SMF) functionality, and/or Authentication Server (AUSF) functionality and which provides connectivity with a further network, such as a telephone network and/or a data communications network (e.g., the Internet), and which is configured to perform any 5G and/or NR operations in addition to or instead of other standards operations at the time of this application. The NCE/MME/SGW/UDM/PCF/AMM/SMF 190 is configurable to perform operations in accordance with example embodiments of the invention in any of an LTE, NR, 5G and/or any standards based communication technologies being performed or discussed at the time of this application.

The gNB 170 is coupled via a link 131 to the NCE/MME/SGW 190 and via link 131 and link 225 to the LMF 200. The link 131 or link 225 may be implemented as, e.g., an S1 interface. The NCE/MME/SGW 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the NCE/MME/SGW 190 to perform one or more operations. In addition, the NCE/MME/SGW 190, as are the other devices, is equipped to perform operations of such as by controlling the UE 110 and/or gNB 170 for 5G and/or NR operations in addition to any other standards operations at the time of this application.

The LMF 200 (NR/5G Node B, an evolved NB, or LTE device) is a network node such as a node including a location management function device (e.g., for NR or LTE long term evolution) that communicates with devices such the eNB/gNB 170 and UE 10 of FIG. 5. The LMF 200 provides access to wireless devices such as the UE 10 to the wireless network 1. The LMF 200 includes one or more processors DP 12A, one or more memories MEM 12B, and one or more transceivers TRANS 12D interconnected through one or more buses. In accordance with the example embodiments these TRANS 12D can include X2 and/or Xn interfaces for use to perform the example embodiments. Each of the one or more transceivers TRANS 12D includes a receiver and a transmitter. The one or more transceivers TRANS 12D can be optionally connected to one or more antennas for communication over at least link 221 with the UE 110. The one or more memories MEM 12B and the computer program code PROG 12C are configured to cause, with the one or more processors DP 12A, the LMF 200 to perform one or more of the operations as described herein. The LMF 200 may communicate with the gNB or eNB 170 such as via link 225 and 131. Further, the link 221, 225, or 13 1and/or any other link may be wired or wireless or both and may implement, e.g., an X2 or Xn interface. Further the link 221, 225, or 13 1and may be through other network devices such as, but not limited to an NCE/MME/SGW/UDM/PCF/AMF/SMF/LMF 14 device as in FIG. 5. The LMF 200 may perform functionalities of an MME (Mobility Management Entity) or SGW (Serving Gateway), such as a User Plane Functionality, and/or an Access Management functionality for LTE and similar functionality for 5G.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. Note that the virtualized entities that result from the network virtualization are still implemented, at some level, using hardware such as processors 152 or 175 and memories 155 and 171, and also such virtualized entities create technical effects.

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multicore processor architecture, as non-limiting examples. The processors 120, 152, and 175 may be means for performing functions and other functions as described herein to control a network device such as the UE 110, gNB 170, and/or NCE/MME/SGW 190 as in FIG. 5.

It is noted that functionality(ies), in accordance with example embodiments of the invention, of any devices as shown in FIG. 5 e.g., the UE 110 and/or gNB 170 can also be implemented by other network nodes, e.g., a wireless or wired relay node (a.k.a., integrated access and/or backhaul (IAB) node). In the IAB case, UE functionalities may be carried out by MT (mobile termination) part of the IAB node, and gNB functionalities by DU (Data Unit) part of the IAB node, respectively. These devices can be linked to the UE 110 as in FIG. 5 at least via the wireless link 111 and/or via the NCE/MME/SGW 190 using link 199 to Other Network(s)/Internet as in FIG. 5.

In general, various embodiments of any of these devices can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Further, the various embodiments of any of these devices can be used with a UE vehicle, a High Altitude Platform Station, or any other such type node associated with a terrestrial network or any drone type radio or a radio in aircraft or other airborne vehicle or a vessel that travels on water such as a boat.

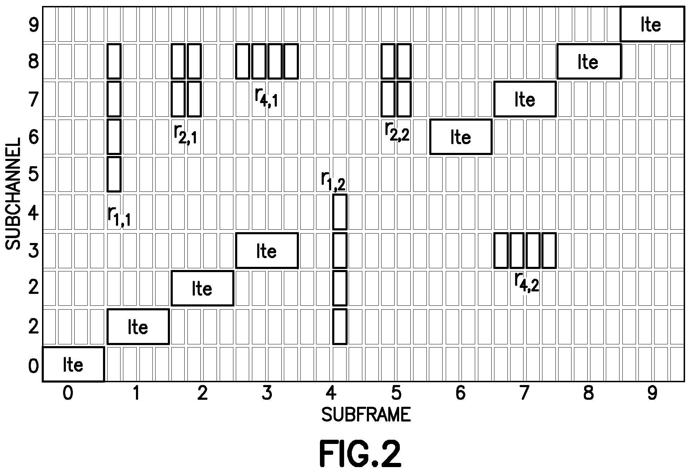

FIG. 2 shows an example, where NR SL is configured with an SCS of 60kHz, corresponding to 4 NR slots per subframe. Resources marked as "lte" are expected to be used for transmission by LTE SL UEs (e.g., they have been indicated as reserved by a received LTE SCI). Candidate resources $r_{1,1}$ and $r_{1,2}$ each consists of a single slot (similar to legacy candidate single-slot resources). Unlike candidate resource $r_{1,1}$, candidate resource $r_{1,2}$ does not occur at the beginning of a subframe - the NR UE may assume that there is however no AGC issue, as no LTE SL transmission is expected in subframe 4. Candidate resources $r_{2,1}$ and $r_{2,2}$ each consists of 2 consecutive slots (with a correspondingly halved number of subchannels). Again, there is no AGC issue expected in subframe 5, even though candidate resource $r_{2,2}$ does not occur at the beginning of the subframe. Finally, candidate resources $r_{4,1}$ and $r_{4,2}$ each consists of 4 consecutive slots (with a single subchannel).

In the example above, the NR PHY layer may report to the NR MAC layer three separately determined candidate resource sets $S_1$, $S_2$, $S_4$, where $S_1 = \{r_{1,1}, r_{1,2}\}$, $S_2 = \{r_{2,1}, r_{2,2}\}$, and $S_4 = \{r_{4,1}, r_{4,2}\}$. Alternatively, the NR PHY layer may determine and report to the NR MAC layer a single candidate resource set $S_A = \{r_{1,1}, r_{1,2}, r_{2,1}, r_{2,2}, r_{4,1}, r_{4,2}\}$.

The following include embodiments in accordance with example embodiments of the invention.

Single candidate resource set ($S_A$)

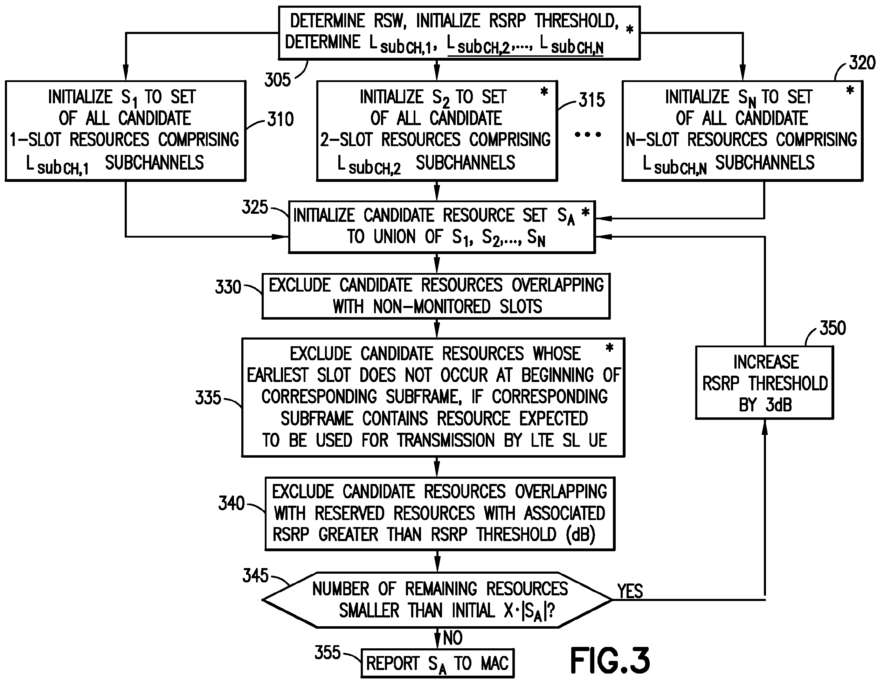

FIG. 3 shows an enhanced UE autonomous resource selection for dynamic coexistence of SL transmissions with different SCS according to the invention.

As shown in step 305 of FIG. 3, there is determining a resource selection window (RSW), initializing an RSRP threshold *RSRPthreshold* and determining different numbers of subchannels $L_{subCH,1}, L_{subCH,2}, ... , L_{subCH,N}$; as shown in step 310 of FIG. 3, there is initializing $S_1$ to the set of all candidate 1-slot resources comprising $L_{subCH,1}$ subchannels; as shown in step 315 of FIG. 3, there is initializing $S_2$ to the set of all candidate 2-slot resources comprising $L_{subCH,2}$ subchannels; and as shown in step 320 of FIG. 3, there is initializing $S_N$ to the set of all candidate N-slot resources comprising $L_{subCH,N}$ subchannels; then, as shown in step 325 of FIG. 3, there is initializing a candidate resource set $S_A$ to the union of $S_1$, $S_2$, ... , $S_N$; as shown in step 330 of FIG. 3, there is excluding candidate resources overlapping with non-monitored slots; as shown in step 335 of FIG. 3, there is excluding candidate resources whose earliest slot does not occur at a beginning of a corresponding subframe, if the corresponding subframe contains resources expected to be used for transmission by an LTE SL UE; as shown in step 340 of FIG. 3, there is excluding candidate resources overlapping with reserved resources with associated RSRP greater than *RSRPthreshold;* as shown in step 345 of FIG. 3, there is determining a number of remaining resources smaller than initial $X \cdot |S_A|$; based on such determining, then there may be, as shown in step 350 of FIG. 3, increasing *RSRPthreshold* by 3dB; then, as shown in step 355 of FIG. 3, there is reporting $S_A$ to MAC.

The key difference compared to the standard procedure is how the candidate resource set ($S_A$) is initialized.

In the standard procedure, the candidate resource set ($S_A$) is initialized to the set of all candidate single-slot resources, where a "candidate single-slot resource" is defined as a set of $L_{subCH}$ contiguous subchannels in a slot. (The UE assumes that any set of $L_{subCH}$ contiguous subchannels included in the corresponding resource pool (RP) within a resource selection window (RSW) corresponds to one candidate single-slot resource.)

Here, it is proposed to remove the "single-slot" constraint for a candidate resource, i.e., allow for more flexibility in the number of slots (n) that a candidate resource may span. Thus, a candidate resource may span multiple (not necessarily consecutive) slots (within a subframe). The number of subchannels $L_{subCH,n}$ may vary depending on the number of slots (n), e.g., the more slots $n$ (time resources), the fewer subchannels $L_{subCH,n}$ (frequency resources), and vice versa (see example in FIG. 2). A "candidate n-slot resource" may be defined as a set of $L_{subCH,n}$ contiguous subchannels across $n$ (consecutive) slots (within a subframe). The UE may assume that any set of $L_{subCH,n}$ contiguous subchannels across $n$ (consecutive) slots (within a subframe) included in the corresponding resource pool (RP) within a resource selection window (RSW) corresponds to one candidate $n$-slot resource. The UE may thus determine a set $S_1$ comprising all candidate 1-slot resources, a set $S_2$ comprising all candidate 2-slot resources, ... , and a set $S_N$ comprising all candidate $N$-slot resources, where $N$ may be the number of NR slots within a subframe (e.g., $N = 4$ in FIG. 2). In some cases, $N$ may also be larger than the number of NR slots within a subframe, if the scheme is used for multi-slot transmission in other settings (such as SL operation in unlicensed spectrum).

The candidate resource set ($S_A$) may then be initialized to the union of set $S_1$, set $S_2$, ... , and set $S_N$, i.e., $S_A = S_1 \cup S_2 \cup ... \cup S_N$. Note that this set ($S_A$) is a much larger set of candidate resources than defined in the standard procedure (which corresponds to set $S_1$ only), due to the additional degree of freedom regarding the number of slots ($n$). Not all values $n = 1, 2, ... , N$ need to be considered (e.g., $n = 3$ is not shown in the example of FIG. 2), but at least two different values of $n$ may/should be selected (e.g., $n = 1$ and $n = N$).

In the example of FIG. 2 (comprising 40 slots and 10 subchannels), there are a total of $M_{total,1} = 40 \times 7 = 280$ candidate 1-slot resources (assuming $L_{subCH,1} = 4$ subchannels), a total of $M_{total,2} = 30 \times 9 = 270$ candidate 2-slot resources (assuming $L_{subCH,2} = 2$ subchannels and allowing only consecutive slots), and a total of $M_{total,4} = 10 \times 10 = 100$ candidate 4-slot resources (assuming $L_{subCH,4} = 1$ subchannel). The union of all the above sets ($n = 1, 2, 4$) comprises a total of $M_{total} = M_{total,1} + M_{total,2} + M_{total,4} = 650$ candidate resources.

In order to ensure the AGC issue is avoided, certain candidate resources may need to be excluded in certain subframes. If a subframe contains a resource expected to be used for transmission by an LTE SL UE, candidate resources in that subframe whose earliest slot does not occur at the beginning of the subframe may be excluded. For example, referring to FIG. 2, candidate resources $r_{1,2}$ and $r_{2,2}$ may be excluded if the UE expects an LTE SL transmission in those subframes.

Referring again to FIG. 2, from the $M_{total,1} = 280$ candidate 1-slot resources, $24 \times 7 = 168$ candidate 1-slot

$$M'_{total,1} = 16 \times 7 = 112$$

resources may cause an AGC issue (thus, only $\qquad$ would remain after AGC-related resource exclusion). Similarly, from the $M_{total,2} = 270$ candidate 2-slot resources, $16 \times 9 = 144$ candidate 2-slot resources

$$M'_{total,2} = 14 \times 9 = 126$$

may cause an AGC issue (thus, only $\qquad$ would remain after AGC-related resource ex-

$$M'_{total,4} = M_{total,4}$$

clusion). The $M_{total,4} = 100$ candidate 4-slot resources would not cause any AGC issue, i.e., $\qquad$. Thus, the total number of candidate resources remaining after AGC-related resource exclusion would be

$$M'_{total} = M'_{total,1} + M'_{total,2} + M'_{total,4} = 338 \qquad M'_{total,4} = 100$$

, which is significantly larger than $\qquad$ (cor-

$$M'_{total,1} = 112$$

responding to Option 1 applied to FIG. 2) as well as significantly larger than $\qquad$ (corresponding to Option 3 applied to FIG. 2.

In some cases, a candidate resource (such as $r_{1,2}$ and $r_{2,2}$) whose earliest slot does not occur at the beginning of a subframe may not be excluded despite the UE expecting an LTE SL transmission in that subframe. This may be the case, for example, if the UE expects to transmit PSSCH (e.g., in a resource previously selected for another TB) at the beginning of the corresponding subframe with a same (or higher) transmit power than that to be used for transmission in the candidate resource. For example, referring to FIG. 2, if the UE has previously reserved a resource for transmission of another TB in the first slot of subframe 4, then candidate resource $r_{1,2}$ may not be excluded even if an LTE SL transmission is expected in subframe 4. However, the transmit power for transmission in candidate resource $r_{1,2}$ may be constrained to be the same as or lower than the transmit power used for transmission of the other TB in the first slot of subframe 4. In some cases (e.g., unicast transmission to a nearby UE), the UE may use a very low transmit power, such that the AGC issue caused at LTE RX UEs is minimal. In such cases, the UE may not need to exclude candidate resources (such as $r_{1,2}$ and $r_{2,2}$) whose earliest slot does not occur at the beginning of a subframe.

As a result of the larger number of remaining candidate resources in the set $S_A$ (due to the additional scheduling flexibility achieved by removing the single-slot constraint), it may often be easier for the UE to fulfil the requirement of a minimum ratio (X) of remaining candidate resources to be reported to the MAC layer (step 7 of the standard procedure). Thus, it is less likely that the UE will need to increase its RSRP threshold for overlap-related resource exclusion (step 6 of the standard procedure), resulting in lower interference among SL transmissions.

Multiple candidate resource sets ($S_1$, $S_2$, $S_N$)

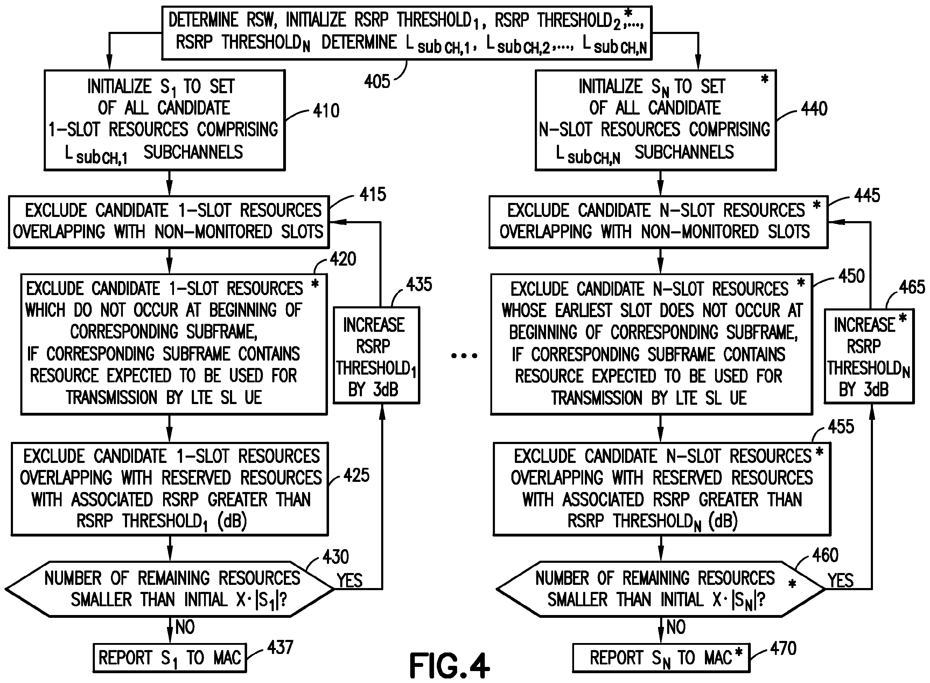

FIG. 4 shows an alternative way of enhancing the standard UE autonomous resource selection procedure (TS 38.214, clause 8.1.4) for dynamic coexistence of SL transmissions with different SCS.

In this case, the UE separately initializes multiple candidate resource sets $S_1$, $S_2$, ... , $S_N$. Each set $S_n$ is initialized to the set of all candidate n-slot resources comprising $L_{subCH,n}$ subchannels. The standard procedure is then performed on each of these sets separately.

In this way, the UE ensures that the sets $S_1$, $S_2$, ... , $S_N$ reported to the MAC layer are individually large enough, i.e., there are enough candidate n-slot resources to choose from for each value of n.

As shown in step 405 of FIG. 4 there is determining a resource selection window (RSW), initializing different RSRP thresholds $RSRPthreshold_1$, $RSRPthreshold_2$, ..., $RSRPthreshold_N$ and determining different numbers of subchannels $L_{subCH,1}$, $L_{subCH,2}$, ... , $L_{subCH,N}$. In a first operation, as shown in step 410 of FIG. 4, there is initializing $S_1$ to the set of all candidate 1-slot resources comprising $L_{subCH,1}$ subchannels; as shown in step 415 of FIG. 4, there is excluding candidate 1-slot resources overlapping with non-monitored slots; as shown in 420 of FIG. 4, there is excluding candidate 1-slot resources which do not occur at the beginning of a corresponding subframe, if the corresponding subframe contains resources expected to be used for transmission by an LTE SL UE; As shown in step 425 of FIG. 4, there is excluding candidate 1-slot resources overlapping with reserved resources with associated RSRP greater than $RSRPthreshold_1$; as shown in step 430 of FIG. 4, there is determining a number of remaining resources smaller than initial $X \cdot |S_1|$; based on such determining, then there may be, as shown in step 435 of FIG. 4, increasing $RSRPthreshold_1$ by 3dB; then, as shown in step 437 of FIG. 4, there is reporting $S_1$ to MAC; in another operation, as shown in step 440 of FIG. 4, there is initializing $S_N$ to the set of all candidate N-slot resources comprising $L_{subCH,N}$ subchannels; as shown in step 445 of FIG. 4, there is excluding candidate N-slot resources overlapping with non-monitored slots; as shown in step 450 of FIG. 4, there is excluding candidate N-slot resources whose earliest slot does not occur at the beginning of a corresponding subframe, if the corresponding subframe contains resources expected to be used for transmission by an LTE SL UE; as shown in step 455 of FIG. 4, there is excluding candidate N-slot resources overlapping with reserved resources with associated RSRP greater than $RSRPthreshold_N$; as shown in step 460 of FIG. 4, there is determining a number of remaining resources smaller than initial $X \cdot |S_N|$; based on such determining, then there may be, as shown in step 465 of FIG. 4, increasing $RSRPthreshold_N$ by 3dB; then, as shown in step 470 of FIG. 4, there is reporting $S_N$ to MAC.

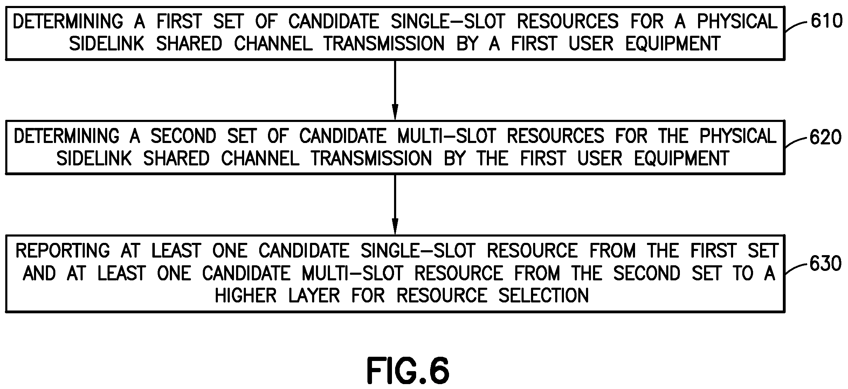

FIG. 6 shows a method in accordance with example embodiments of the invention which may be performed by an apparatus.

FIG. 6 illustrates operations which may be performed by a network device such as, but not limited to, a network device UE 110 or a user equipment as in FIG. 5. As shown in step 610 of FIG. 6 there is determining a first set of candidate single-slot resources for a physical sidelink shared channel transmission by a first user equipment; as shown in step 620 of FIG. 6 there is determining a second set of candidate multi-slot resources for the physical sidelink shared channel transmission by the first user equipment; then as shown in step 630 of FIG. 6 there is reporting at least one candidate single-slot resource from the first set and at least one candidate multi-slot resource from the second set to a higher layer for resource selection.

In accordance with example embodiments of the invention as disclosed in the paragraph above, there is determining a union set by forming a union of the first set and the second set; determining a subset of the union set by excluding a candidate resource at least based on whether the candidate resource overlaps with a resource reserved for transmission by a second user equipment; and reporting the determined subset to the higher layer for resource selection.

In accordance with example embodiments of the invention as disclosed in the paragraphs above, wherein determining the subset further comprises excluding a candidate resource based at least on whether an earliest slot of the candidate resource occurs at the beginning of a corresponding transmission time interval or subframe for transmission using a smaller subcarrier spacing.

In accordance with example embodiments of the invention as disclosed in the paragraphs above, wherein excluding the candidate resource is further based on whether the corresponding transmission time interval or subframe comprises a resource reserved for transmission by a third user equipment using the smaller subcarrier spacing.

In accordance with example embodiments of the invention as disclosed in the paragraphs above, wherein excluding the candidate resource is further based on whether the first user equipment is expected to transmit at the beginning of the corresponding transmission time interval or subframe.

A non-transitory computer-readable medium (Memory(ies) 125 as in FIG. 5) storing program code (Computer Program Code 123 and/or Resource module 140-2 as in FIG. 5), the program code executed by at least one processor (Processor(s) 120 and/or Resource module 140-1 as in FIG. 5) to perform the operations as at least described in the paragraphs above.

In accordance with an example embodiment of the invention as described above there is an apparatus comprising: means for determining (one or more transceivers 130, Memory(ies) 125, Computer Program Code 123 and/or Resource module 140-2, and Processor(s) 120 and/or Resource module 140-1 as in FIG. 5) a first set of candidate single-slot resources for a physical sidelink shared channel transmission by a first user equipment; means for determining (one or more transceivers 130, Memory(ies) 125, Computer Program Code 123 and/or Resource module 140-2, and Processor(s) 120 and/or Resource module 140-1 as in FIG. 5) a second set of candidate multi-slot resources for the physical sidelink shared channel transmission by the first user equipment; and means for reporting (one or more transceivers 130, Memory(ies) 125, Computer Program Code 123 and/or Resource module 140-2, and Processor(s) 120 and/or Resource module 140-1 as in FIG. 5) at least one candidate single-slot resource from the first set and at least one candidate multi-slot resource from the second set to a higher layer for resource selection.

In the example aspect of the invention according to the paragraph above, wherein at least the means for determining and reporting comprises a non-transitory computer readable medium [Memory(ies) 125 as in FIG. 5] encoded with a computer program [Computer Program Code 123 and/or Resource module 140-2 as in FIG. 5] executable by at least one processor [Processor(s) 120 and/or Resource module 140-1 as in FIG. 5].

Advantages of the proposed solution include that the proposed solution intelligently combines Option 1 (NR slot aggregation) and Option 3 (NR slot exclusion) to increase the number of candidate resources in an enhanced UE autonomous resource selection procedure. With an increased number of candidate resources (compared to Option 1 or Option 3), there is a reduced likelihood of the NR SL UE increasing its RSRP threshold, which may cause increased interference to other SL UEs.

Further, in accordance with example embodiments of the invention there is circuitry for performing operations in accordance with example embodiments of the invention as disclosed herein. This circuitry can include any type of circuitry including content coding circuitry, content decoding circuitry, processing circuitry, image generation circuitry, data analysis circuitry, etc.). Further, this circuitry can include discrete circuitry, application-specific integrated circuitry (ASIC), and/or field-programmable gate array circuitry (FPGA), etc. as well as a processor specifically configured by software to perform the respective function, or dual-core processors with software and corresponding digital signal processors, etc.). Additionally, there are provided necessary inputs to and outputs from the circuitry, the function performed by the circuitry and the interconnection (perhaps via the inputs and outputs) of the circuitry with other components that may include other circuitry in order to perform example embodiments of the invention as described herein.

In accordance with example embodiments of the invention as disclosed in this application this application, the "circuitry" provided can include at least one or more or all of the following:

(a) hardware-only circuit implementations (such as implementations in only analog and/or digital circuitry);
(b) combinations of hardware circuits and software, such as (as applicable):

(i) a combination of analog and/or digital hardware circuit(s) with software/firmware; and
(ii) any portions of hardware processor(s) with software (including digital signal processor(s)), software, and memory(ies) that work together to cause an apparatus, such as a mobile phone or server, to perform various functions, such as functions or operations in accordance with example embodiments of the invention as disclosed herein); and

(c) hardware circuit(s) and or processor(s), such as a microprocessor(s) or a portion of a microprocessor(s), that requires software (e.g., firmware) for operation, but the software may not be present when it is not needed for operation.

This definition of 'circuitry' applies to all uses of this term in this application, including in any claims. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular claim element, a baseband integrated circuit or applications processor integrated circuit for a mobile phone or a similar integrated circuit in a server, a cellular network device, or other network device.

In general, the various embodiments may be implemented in hardware or special purpose circuits, software, logic or any combination thereof. For example, some aspects may be implemented in hardware, while other aspects may be implemented in firmware or software which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

Embodiments of the inventions may be practiced in various components such as integrated circuit modules. The design of integrated circuits is by and large a highly automated process.

Complex and powerful software tools are available for converting a logic level design into a semiconductor circuit design ready to be etched and formed on a semiconductor substrate.

The word "exemplary" is used herein to mean "serving as an example, instance, or illustration." Any embodiment described herein as "exemplary" is not necessarily to be construed as preferred or advantageous over other embodiments. All of the embodiments described in this Detailed Description are exemplary embodiments provided to enable persons skilled in the art to make or use the invention and not to limit the scope of the invention which is defined by the claims.

The foregoing description has provided by way of exemplary and non-limiting examples a full and informative description of the best method and apparatus presently contemplated by the inventors for carrying out the invention. However, various modifications and adaptations may become apparent to those skilled in the relevant arts in view of the foregoing description, when read in conjunction with the accompanying drawings and the appended claims. However, all such and similar modifications of the teachings of example embodiments of this invention will still fall within the scope of this invention.

It should be noted that the terms "connected," "coupled," or any variant thereof, mean any connection or coupling, either direct or indirect, between two or more elements, and may encompass the presence of one or more intermediate elements between two elements that are "connected" or "coupled" together. The coupling or connection between the elements can be physical, logical, or a combination thereof. As employed herein two elements may be considered to be "connected" or "coupled" together by the use of one or more wires, cables and/or printed electrical connections, as well as by the use of electromagnetic energy, such as electromagnetic energy having wavelengths in the radio frequency region, the microwave region and the optical (both visible and invisible) region, as several non-limiting and nonexhaustive examples.

Furthermore, some of the features of the preferred embodiments of this invention could be used to advantage without the corresponding use of other features. As such, the foregoing description should be considered as merely illustrative of the principles of the invention, and not in limitation thereof.

**Claims**

1.  An apparatus, comprising:

    means for determining a first set of candidate single-slot resources for a physical sidelink shared channel transmission by a first user equipment;
    means for determining a second set of candidate multi-slot resources for the physical sidelink shared channel transmission by the first user equipment; and
    means for reporting at least one candidate single-slot resource from the first set and at least one candidate multi-slot resource from the second set to a higher layer for resource selection.

2.  The apparatus of claim 1, further comprising:

    means for determining a union set by forming a union of the first set and the second set;
    means for determining a subset of the union set by excluding a candidate resource at least based on whether the candidate resource overlaps with a resource reserved for transmission by a second user equipment; and
    means for reporting the determined subset to the higher layer for resource selection.

3.  The apparatus of claim 2, wherein determining the subset further comprises excluding a candidate resource based at least on whether an earliest slot of the candidate resource occurs at the beginning of a corresponding transmission time interval or subframe for transmission using a smaller subcarrier spacing than a carrier spacing which is to be used for the physical sidelink shared channel transmission.

4.  The apparatus of claim 3, wherein excluding the candidate resource is further based on whether the corresponding transmission time interval or subframe comprises a resource reserved for transmission by a third user equipment using the smaller subcarrier spacing.

5. The apparatus of claim 3, wherein excluding the candidate resource is further based on whether the first user equipment is expected to transmit at the beginning of the corresponding transmission time interval or subframe.

6. A method, comprising:

determining a first set of candidate single-slot resources for a physical sidelink shared channel transmission by a first user equipment;
determining a second set of candidate multi-slot resources for the physical sidelink shared channel transmission by the first user equipment; and
reporting at least one candidate single-slot resource from the first set and at least one candidate multi-slot resource from the second set to a higher layer for resource selection.

7. The method of claim 6, comprising:

determining a union set by forming a union of the first set and the second set;
determining a subset of the union set by excluding a candidate resource at least based on whether the candidate resource overlaps with a resource reserved for transmission by a second user equipment; and
reporting the determined subset to the higher layer for resource selection.

8. The method of claim 7, wherein determining the subset further comprises excluding a candidate resource based at least on whether an earliest slot of the candidate resource occurs at the beginning of a corresponding transmission time interval or subframe for transmission using a smaller subcarrier spacing than a carrier spacing which is to be used for the physical sidelink shared channel transmission.

9. The method of claim 8, wherein excluding the candidate resource is further based on whether the corresponding transmission time interval or subframe comprises a resource reserved for transmission by a third user equipment using the smaller subcarrier spacing.

10. The method of claim 8, wherein excluding the candidate resource is further based on whether the first user equipment is expected to transmit at the beginning of the corresponding transmission time interval or subframe.

11. A computer program comprising instructions stored thereon for performing at least the following:

determining a first set of candidate single-slot resources for a physical sidelink shared channel transmission by a first user equipment;
determining a second set of candidate multi-slot resources for the physical sidelink shared channel transmission by the first user equipment; and
reporting at least one candidate single-slot resource from the first set and at least one candidate multi-slot resource from the second set to a higher layer for resource selection.

12. The computer program of claim 11, wherein the instructions stored thereon further performing:

determining a union set by forming a union of the first set and the second set;
determining a subset of the union set by excluding a candidate resource at least based on whether the candidate resource overlaps with a resource reserved for transmission by a second user equipment; and
reporting the determined subset to the higher layer for resource selection.

13. The computer program of claim 12, wherein determining the subset further comprises excluding a candidate resource based at least on whether an earliest slot of the candidate resource occurs at the beginning of a corresponding transmission time interval or subframe for transmission using a smaller subcarrier spacing than a carrier spacing which is to be used for the physical sidelink shared channel transmission.

14. The computer program of claim 13, wherein excluding the candidate resource is further based on whether the corresponding transmission time interval or subframe comprises a resource reserved for transmission by a third user equipment using the smaller subcarrier spacing.

15. The computer program of claim 13, wherein excluding the candidate resource is further based on whether the first user equipment is expected to transmit at the beginning of the corresponding transmission time interval or subframe.

FIG.1

FIG.2

FIG.3

305 DETERMINE RSW, INITIALIZE RSRP THRESHOLD, DETERMINE $L_{subCH,1}$, $L_{subCH,2}$,..., $L_{subCH,N}$ *

310 INITIALIZE $S_1$ TO SET OF ALL CANDIDATE 1-SLOT RESOURCES COMPRISING $L_{subCH,1}$ SUBCHANNELS

315 INITIALIZE $S_2$ TO SET OF ALL CANDIDATE 2-SLOT RESOURCES COMPRISING $L_{subCH,2}$ SUBCHANNELS *

320 INITIALIZE $S_N$ TO SET OF ALL CANDIDATE N-SLOT RESOURCES COMPRISING $L_{subCH,N}$ SUBCHANNELS *

325 INITIALIZE CANDIDATE RESOURCE SET $S_A$ TO UNION OF $S_1$, $S_2$,..., $S_N$ *

330 EXCLUDE CANDIDATE RESOURCES OVERLAPPING WITH NON-MONITORED SLOTS

335 EXCLUDE CANDIDATE RESOURCES WHOSE EARLIEST SLOT DOES NOT OCCUR AT BEGINNING OF CORRESPONDING SUBFRAME, IF CORRESPONDING SUBFRAME CONTAINS RESOURCE EXPECTED TO BE USED FOR TRANSMISSION BY LTE SL UE *

340 EXCLUDE CANDIDATE RESOURCES OVERLAPPING WITH RESERVED RESOURCES WITH ASSOCIATED RSRP GREATER THAN RSRP THRESHOLD (dB)

345 NUMBER OF REMAINING RESOURCES SMALLER THAN INITIAL $X \cdot |S_A|$?

350 INCREASE RSRP THRESHOLD BY 3dB

355 REPORT $S_A$ TO MAC

YES

NO

EP 4 415 447 A1

DETERMINE RSW, INITIALIZE RSRP THRESHOLD$_1$, RSRP THRESHOLD$_2$,*..., RSRP THRESHOLD$_N$ DETERMINE $L_{subCH,1}$, $L_{subCH,2}$,..., $L_{subCH,N}$ ⌐405

INITIALIZE S$_1$ TO SET OF ALL CANDIDATE 1-SLOT RESOURCES COMPRISING $L_{subCH,1}$ SUBCHANNELS ⌐410

INITIALIZE S$_N$ TO SET* OF ALL CANDIDATE N-SLOT RESOURCES COMPRISING $L_{subCH,N}$ SUBCHANNELS ⌐440

EXCLUDE CANDIDATE 1-SLOT RESOURCES OVERLAPPING WITH NON-MONITORED SLOTS ⌐415

EXCLUDE CANDIDATE N-SLOT RESOURCES * OVERLAPPING WITH NON-MONITORED SLOTS ⌐445

EXCLUDE CANDIDATE 1-SLOT RESOURCES * WHICH DO NOT OCCUR AT BEGINNING OF CORRESPONDING SUBFRAME, IF CORRESPONDING SUBFRAME CONTAINS RESOURCE EXPECTED TO BE USED FOR TRANSMISSION BY LTE SL UE ⌐420

INCREASE RSRP THRESHOLD$_1$ BY 3dB ⌐435

· · ·

EXCLUDE CANDIDATE N-SLOT RESOURCES * WHOSE EARLIEST SLOT DOES NOT OCCUR AT BEGINNING OF CORRESPONDING SUBFRAME, IF CORRESPONDING SUBFRAME CONTAINS RESOURCE EXPECTED TO BE USED FOR TRANSMISSION BY LTE SL UE ⌐450

INCREASE* RSRP THRESHOLD$_N$ BY 3dB ⌐465

EXCLUDE CANDIDATE 1-SLOT RESOURCES OVERLAPPING WITH RESERVED RESOURCES WITH ASSOCIATED RSRP GREATER THAN RSRP THRESHOLD$_1$ (dB) ⌐425

EXCLUDE CANDIDATE N-SLOT RESOURCES* OVERLAPPING WITH RESERVED RESOURCES WITH ASSOCIATED RSRP GREATER THAN RSRP THRESHOLD$_N$ (dB) ⌐455

NUMBER OF REMAINING RESOURCES SMALLER THAN INITIAL $X \cdot |S_1|$? ⌐430 — YES

NUMBER OF REMAINING RESOURCES * SMALLER THAN INITIAL $X \cdot |S_N|$? ⌐460 — YES

NO

NO

REPORT S$_1$ TO MAC ⌐437

REPORT S$_N$ TO MAC* ⌐470

FIG.4

FIG.5

EP 4 415 447 A1

| DETERMINING A FIRST SET OF CANDIDATE SINGLE—SLOT RESOURCES FOR A PHYSICAL SIDELINK SHARED CHANNEL TRANSMISSION BY A FIRST USER EQUIPMENT | ~610 |

| DETERMINING A SECOND SET OF CANDIDATE MULTI—SLOT RESOURCES FOR THE PHYSICAL SIDELINK SHARED CHANNEL TRANSMISSION BY THE FIRST USER EQUIPMENT | ~620 |

| REPORTING AT LEAST ONE CANDIDATE SINGLE—SLOT RESOURCE FROM THE FIRST SET AND AT LEAST ONE CANDIDATE MULTI—SLOT RESOURCE FROM THE SECOND SET TO A HIGHER LAYER FOR RESOURCE SELECTION | ~630 |

## FIG.6

**EUROPEAN SEARCH REPORT**

Europäisches
Patentamt
European
Patent Office
Office européen
des brevets

Application Number

EP 23 21 7407

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2021/307023 A1 (HE CHAO [US] ET AL) 30 September 2021 (2021-09-30) | 1,6,11 | INV. H04W72/02 |
| A | * page 12, paragraph 199 - paragraph 200 * * page 14, paragraph 242 - page 15, paragraph 243 * | 2-5, 7-10, 12-15 | ADD. H04W72/40 H04W72/0446 |
| Y | WO 2020/173536 A1 (HUAWEI TECH CO LTD [CN]; MEDINA DANIEL [DE]) 3 September 2020 (2020-09-03) | 1,6,11 | H04L5/00 |
| A | * page 22 * | 2-5, 7-10, 12-15 | |

TECHNICAL FIELDS
SEARCHED      (IPC)

H04W
H04L

The present search report has been drawn up for all claims

| Place of search | Date of completion of the search | Examiner |
|---|---|---|
| The Hague | 29 May 2024 | Draa, Sami |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 23 21 7407

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2024

| Patent document cited in search report | Publication date | Patent family member(s) | Publication date |
|---|---|---|---|
| US 2021307023 A1 | 30-09-2021 | EP 3818758 A1 | 12-05-2021 |
| | | KR 20210024197 A | 04-03-2021 |
| | | US 2020029340 A1 | 23-01-2020 |
| | | US 2021307023 A1 | 30-09-2021 |
| | | WO 2020017939 A1 | 23-01-2020 |
| WO 2020173536 A1 | 03-09-2020 | NONE | |